# EUROPEAN PATENT SPECIFICATION

(11) **EP 1 424 184 B1**
(45) Date of publication and mention of the grant of the patent: **05.01.2011**
(21) Application number: 03425750.1
(22) Date of filing: 21.11.2003
(51) Int. Cl.: B29C 43/24

(54) **Device for the inserting and removing rollers in a calender assembly**
Einrichtung zum Einfügen und Entfernen von Walzen in Kalander-Anlagen
Dispositif pour le changement des rouleaux d'un système de calandrage

(30) Priority: 28.11.2002 IT VA20020062
(43) Date of publication of application: 02.06.2004
(73) Proprietor: Comerio Ercole S.p.A., 21052 Busto Arsizio (Varese) (IT)
(72) Inventor: Lualdi, Renato, 21052 Busto Arsizio (IT)
(74) Representative: Pellegri, Alberto

(56) References cited:
- US-A- 1 793 612
- US-A- 3 581 340
- US-A- 4 681 723
- US-A- 4 784 596
- US-A- 4 997 358
- PATENT ABSTRACTS OF JAPAN vol. 0090, no. 51 (M-361), 6 March 1985 (1985-03-06) & JP 59 187832 A (BRIDGESTONE KK), 25 October 1984 (1984-10-25)
- PATENT ABSTRACTS OF JAPAN vol. 1996, no. 06, 28 June 1996 (1996-06-28) & JP 8 039592 A (SHIN ETSU POLYMER CO LTD), 13 February 1996 (1996-02-13)

## Description

### FIELD OF THE INVENTION

The present invention relates to a calender for processing plastic materials and alike materials that may be calendered, as defined in the preamble of claim 1.

A calender comprising these features is known from JP-A-8039592.

### BACKGROUND OF THE INVENTION

The large variety of materials that may be calendered and the even more stringent needs for special processing of the material that may be calendered, require calenders with certain determined characteristics for not penalizing productivity and/or the quality of the calendered products.

Generally calenders are made with a certain number of calendering cylinders and an outlet roller train composed of a plurality of rollers cooperating with the outlet cylinder to lift off and pull the sheet of calendered material, the first roller of which acts as a "lift off' roller of the sheet of calendered material from the surface of the last calendering cylinder of the machine.

Traditionally, the calendering cylinders are mutually disposed in an overturned or upright "L" or "F" arrangement. Generally, there are either four or five calendering cylinders.

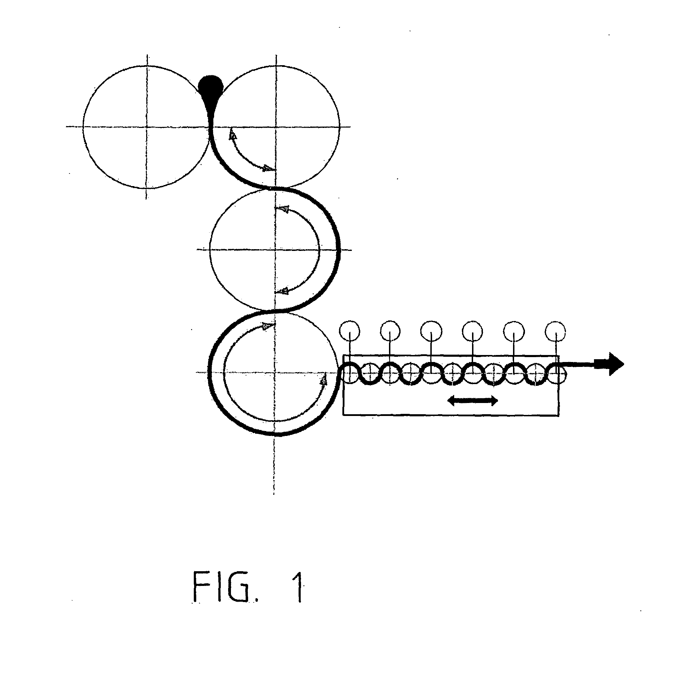

Figures 1, 2 and 3 are functional schemes of a four-cylinder calender, of a five-cylinder calender and a side elevation view of the five-cylinder machine, respectively.

It is evident that flexibility of use of the calender to meet different processing requirements would be improved if it were possible to configure the same calender for operation alternatively with four or five calendering rolls. This would greatly enhance the possibility of optimizing the operating conditions adapting them in the most effective way to the rheological, elastic and plastic characteristics of the material to be calendered.

### OBJECT AND SUMMARY OF THE INVENTION

The US patent No. 4,681,723 discloses an improved apparatus and method for calendering thermoplastic material in which an endless belt is interposed between the calendered material and the last calender roll. The belt conveys the thermoplastic calendered sheet around the last calender roll and toward the stripper roll.

The US patent No. 4,784,596 discloses a calendering apparatus that includes means for replacing a desired take-up roller from a take-up roller train.

The US patent No. 3,581,340 discloses a drawing calender for the production of foil webs from rubber or thermoplastic materials, followed by optional racking and embossing means, the racking means and the embossing means being lodged in a separate carriage capable of traveling between a working position close to the calender and an idle position, the two carriages being mounted one above the other for parallel running, and the lower carriage being provided, at the end adjacent to the calender, with an overhanging bowl which can also serve as a guiding roller.

A calender has been devised and is the object of this invention having a certain number of calendering cylinders that allows, through simple manouvres, to configure the calender for working with a reduced number of calendering cylinders, while keeping the roller train for lifting off and pulling the calendered material substantially in the same position and orientation in respect to the same last calendering cylinder of the machine, both in the configuration of operation with a reduced number of calendering cylinders and in the configuration of operation with all calendering cylinders of the machine.

This feature of the configurable calender of the invention allows to retain unchanged and usable in both configurations of the calender all the control devices of the thickness (i.e. of the density of the calendered material) as well as the closed loop regulation devices of the parameters that normally present in a calender for optimizing the calendering action of the cylinders on the material.

The objective of the invention is achieved by the calender as defined by the features of claim 1. Preferred embodiments are disclosed in the subclaims.

Commonly, a device for measuring the thickness or the density (for instance densimeter based on the use of a radioactive source) drives in a closed loop mode both an actuator that regulates the gap between the last cylinder and the second last cylinder by adjusting the position of the last cylinder, as well as actuators for correcting bendings, of the calenders that commonly include a so-called cross-axis adjusting device acting on the second last calendering cylinder and a roll-bending compensating device acting on the last calendering cylinder, as it is well known to any person skilled in the art.

The innovative architecture of a calender configurable for working with a different number of calendering cylinders of this invention ensures a full functionality of all these devices in both the alternative configurations.

For example, in the case of a five cylinder calender that may be configured for working either with four or five cylinders, when the calender is to be configured for working with four cylinders, it is simply required to invert the direction of rotation of the cylinders of the calender and the insertion by dedicated pneumatic or hydraulic actuators of an additional roller between the first roller of the pulling outlet roller train of the calendered material and the last calendering cylinder, by shifting backward the roller train as much as sufficient to accomodate the additional roller that will thereafter act as the first (lift-off) roller of the outlet roller train.

When the calender is to be re-configured back for working with five cylinders, the additional roller is moved by the same pneumatic or hydraulic actuators to a rest position, and the roller train is shifted back toward the last calendering cylinder.

Of course, also the feeding point of the material to be calendered will be coordinately shifted when inverting the direction of rotation of the cylinders of the calender for configuring it for working with four or five cylinders. Even this ancillary configuring operation may be carried out by actuators driven by pneumatic or hydraulic means, as will be described in more detail hereinafter.

The invention is more precisely defined in the annexed claims.

### BRIEF DESCRIPTION OF THE DRAWINGS

The different aspects and advantages of the configurable architecture of this invention will become even more evident through the following description of few embodiments of this invention and by referring to the attached drawings, wherein:
**Figure 1** is the functional scheme of a known four-cylinders calender in an overturned "L" arrangement;
**Figure 2** is the functional scheme of a known five-cylinder calender in an overturned "L" arrangement;
**Figure 3** is a side view of a known five cylinder calender in an overturned "L" arrangement highlighting the main functional points of the machine;
**Figure 4** is a functional scheme of a calender of this invention configured for working with five calendering cylinders;
**Figure 5** is a side view of the machine of the invention of Figure 4 highlighting the main functional parts of the machine;
**Figure 6** is a functional scheme of the same calender of this invention of Figure 4, configured for working with four calendering cylinders;
**Figure 7** is a side view of the machine of Figure 6 highlighting the main functional parts of the machine;
**Figure 8** is a side view of a calender of the invention configured for working with five calendering cylinders, realized according the so-called upright "L" arrangement.

### DESCRIPTION OF EMBODIMENTS OF THE INVENTION

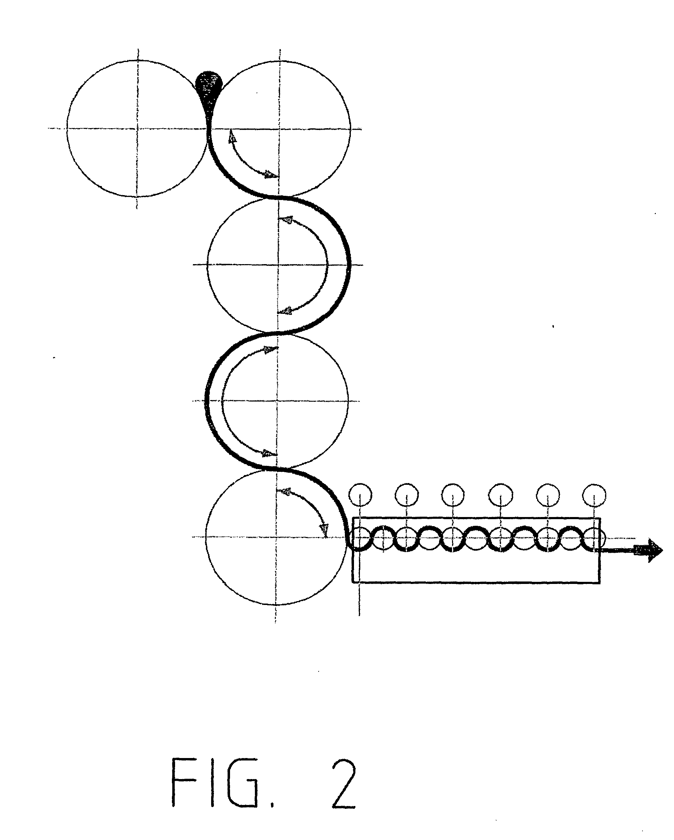

Figures 1 and 2 are functional schemes of an overturned "L" five cylinder calender and of an overturned "L" four cylinder calender, respectively.

In both schemes it is easily recognizable the roller train for lifting-off and pulling the calendered material from the last calendering cylinder of the machine.

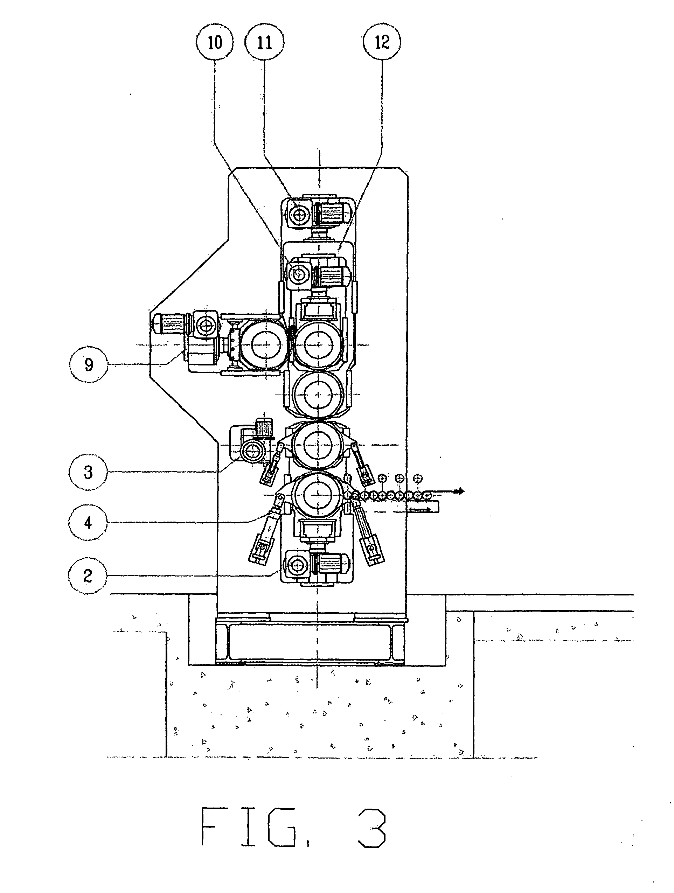

Figure 3 is a simplified side view of a known five cylinder calender, the functional scheme of which is shown in Figure 2.

The numeral 12 indicates the structure known in the art as "cage", the height of which may be adjusted by the actuator 11 for regulating the gap between the third and the fourth cylinder aligned on the vertical axis (according to this so-called overturned "L" arrangement) that allows the simultaneous displacement of two cylinders (that is the second and the third cylinder) in respect to the other adjacent aligned cylinder (that is in respect to the fourth cylinder).

The actuator 10, acting on the position of the second cylinder, is used for regulating the gap between the second and the third calendering cylinder.

The actuator 9, acting on the position of the first cylinder, regulates the gap between the first and the second cylinder.

The actuator 2 regulates the gap between the fourth (second last) and fifth (last) calendering cylinder, by acting on the position of the fifth (last) cylinder.

The actuator 3, acting on the inclination of the axis of the fourth (second last) cylinder, performs the so-called "cross-axis" regulation.

The pneumatic or hydraulic actuators 4, acting on the configuration of the fifth (last) cylinder, performs the so-called "roll-bending" regulation.

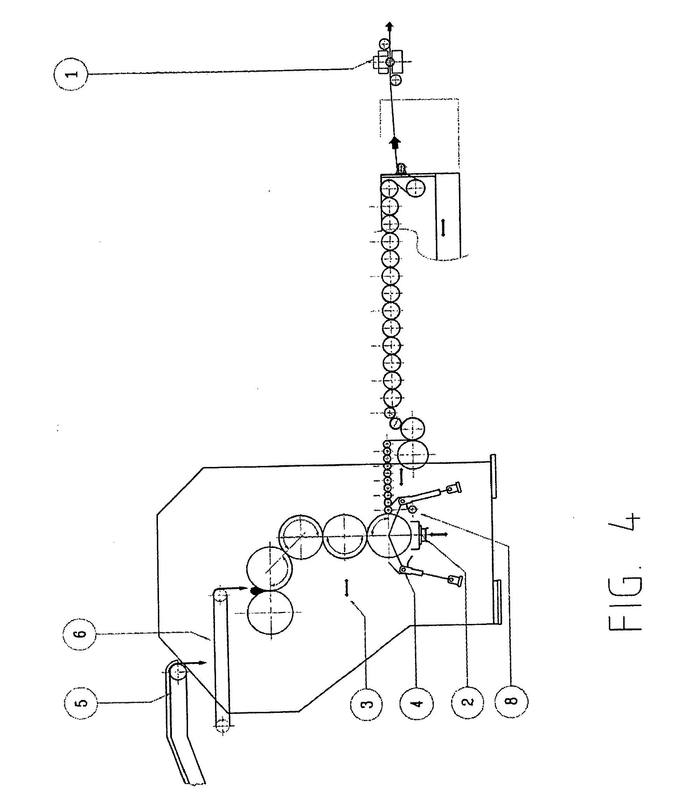

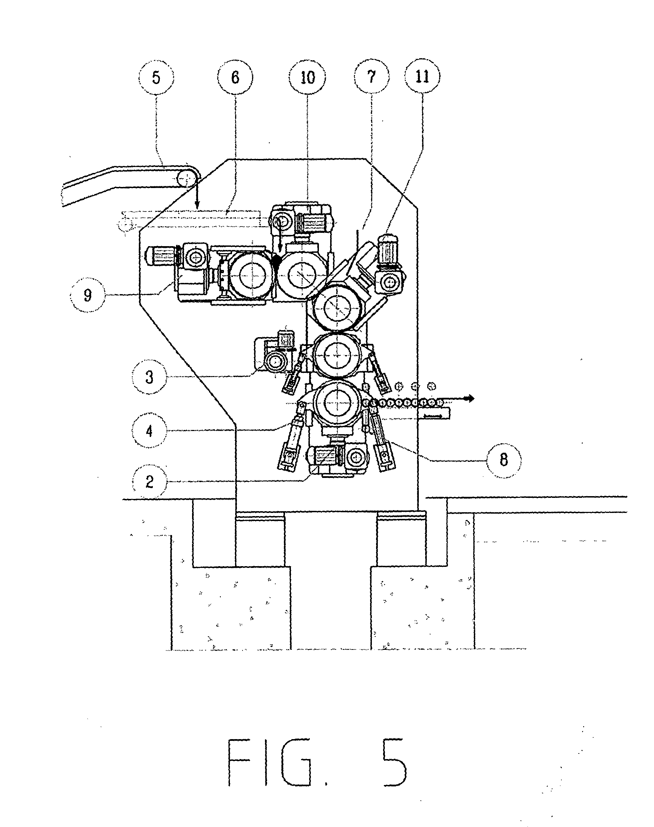

Figures 4 and 5 depict, for an immediate comparison with Figures 1 and 3 that depict a known machine, a calender realized according to this invention configured for working with five calendering cylinders.

A sensor 1 for monitoring the thickness (or the density) of the calendered sheet, is also depicted in the functional scheme of Figure 4. The signal produced by the sensor may be used for implementing an automatic regulation of the gaps among the calendering cylinders of the machine, according to common practices.

In order to facilitate an immediate comparison, parts and devices that carry out the same functions in the known calender of Figure 3 as well as in the calender of the invention of Figure 5 are indicated with the same numerals in the figures.

According to the invention, the position of the second calendering cylinder is not aligned to that of the last three calendering cylinders of the machine, but it axis lies on a line substantially inclined by a 45° angle from the vertical alignment line of the last three calendering cylinders.

As it is possible to notice, by disposing mutually the second and the third cylinder at a 45° angle the actuator 11 that regulates the gap no longer needs to shift two cylinders at the time, to this end installed in an appropriate structure (cage) as it was necessary in the known machine of Figure 3.

The regulation of the gap between the calendering cylinders of the calender of this invention may advantageously act independently from one another (elimination of the constraints imposed by the use of a cage for simultaneously shifting two cylinders). In fact the mutual arrangement at 45° angle of the second and third cylinder allows reciprocal movements between the two cylinders that do not influence the gap between adjacent cylinders, in particular:
- displacing the second cylinder along the vertical axis by means of actuator 10 allows to vary the gap in respect to the third cylinder without influencing substantially the gap in respect to the first cylinder;
- displacing the third cylinder along a 45° angle inclined axis performed by means of the actuator 11 allows to vary the gap in respect to the fourth cylinder without substantially influencing the gap in respect to the second cylinder;
- the displacement organs of the first cylinder and of the last cylinder, driven by the actuators 9 and 2, respectively, remain unmodified and independent from each other while the relative position of the fourth (second last) cylinder remain fixed.

Another important advantage of this arrangement of the second cylinder in respect to the others (in respect to the first and the third cylinder) is that the total contact surface of the material with the calendering cylinders is increased (equivalent to 1.75 circumferences in case of cylinders of the same diameter compared to 1.5 circumferences of the prior art calender of Figure 3), while leaving unchanged the contact surface with the last two calendering cylinders that commonly have only a finishing function.

This, from one end (unchanged contact with the last two cylinders) ensures the same finishing of the material in the different working configurations of the machine, while from the other end, it allows a more effective processing of the calendered material because of the increased contact time with the second and the third calendering cylinder, (in the five calendering cylinders configuration) or with the third cylinder (in a working configuration with four calendering cylinders that will be described hereinafter).

As it may be observed in Figure 5, differently from the known machine of Figure 3, there is an additional small roller 8 that, in this working configuration with five calendering cylinders of the machine, is kept in a parking position and does not have any function.

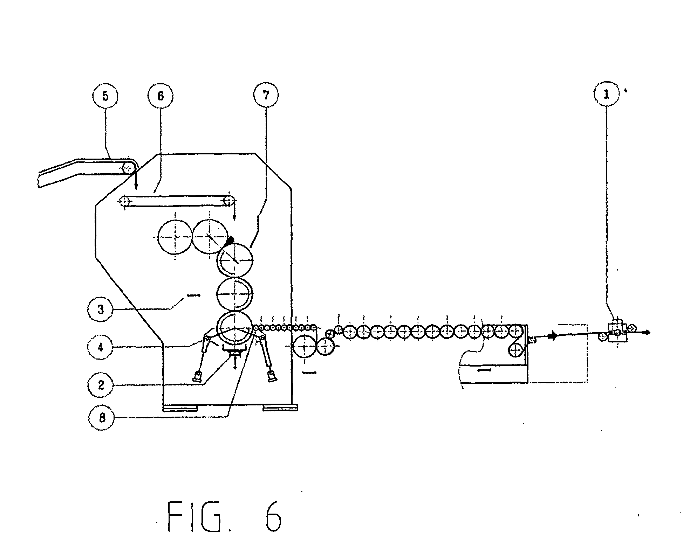

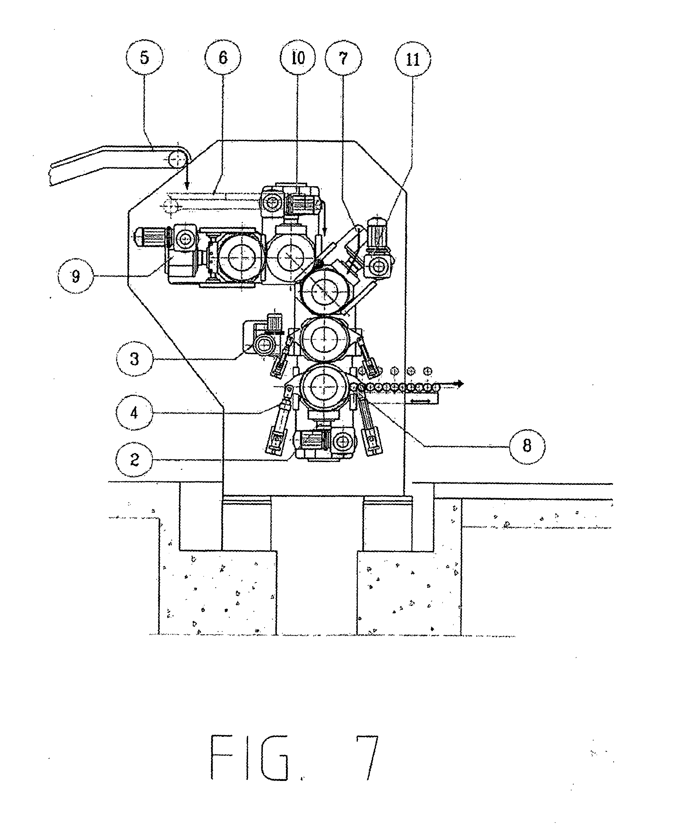

Figures 6 and 7 represent respectively a functional scheme and a side view of the same machine of Figure 5, relative to a configuration of the calender of the invention for processing the material with four calendering cylinders.

The baffle 7 "bounds" the fall by gravity of the material to be calendered that is fed to the machine, preventing it from falling beyond the bounds of feeding zone between the second and the third cylinder of the machine.

As it is may be observed, the only actions that may of course be automatically executed for changing the configuration of the machine, are:
- inverting the direction of rotation of the calendering cylinders of the machine;
- changing the point at which the material is fed to the calender, in order to let it fall between the second and the third cylinder of the machine (instead of between the first and the second);
- lifting and inserting the additional roller 8 in the outlet roller train to its working position as "lift off" roller, by coordinately shifting backward of a corresponding distance the outlet roller train that was used in the previous configuration of Figure 5.

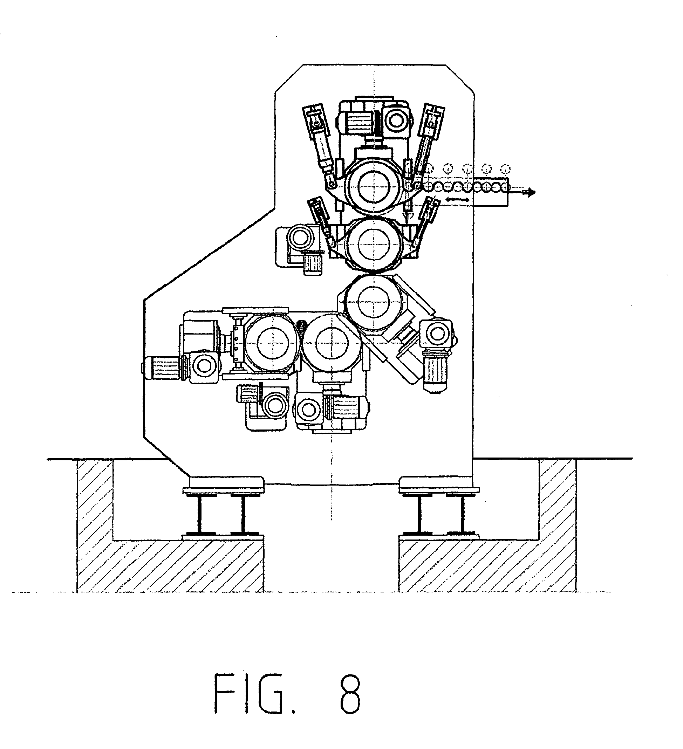

Although an embodiment of this invention in a calender directly comparable with a traditional calender with an overturned "L" arrangement of the calenders, the calender of this invention may be realized also with an arrangement of the calenders functionally comparable to the other classic arrangement, that is according to an upright "L" arrangement, as depicted in Figure 8.

## Claims

1. A calender for processing plastic and similar materials having five calendering cylinders disposed in an upright or overturned "L" arrangement the short leg being constituted by a first and a second calendering cylinder and the long leg by a third, a fourth and a fifth calendering cylinder, and comprising an outlet roller train for lifting off and pulling the sheet of calendered material from the last calendering cylinder, composed of a first lift off roller (8) followed by a plurality of pull rollers the axis of which are substantially lying on a plane orthogonal on the surface of said last calendering cylinder, and at least a conveyor belt (6) for feeding the material to be calendered uniformly along the gap between the first two calendering cylinders, **characterized in that** the axis of rotation of the second cylinder lies on a first alignment line with the axis of rotation of the first cylinder and on a second alignment line with the axis of rotation of the third cylinder that intercepts at an angle of 45° said first alignment line and a third alignment line of the axis of rotation of said third, fourth and fifth cylinders, and the calender is configurable for working either with four cylinders of with five cylinders by comprising:
means for advancing and retracting said conveyor belt (6) for feeding the material to be calendered between said second and said third calendering cylinder or between said first and said second calendering cylinder, upon configuring the calender for working with four or with five calendering cylinders;
means for inverting the direction of rotation of the calendering cylinders upon switching from a configuration to the other;
means for inserting and removing a lift off roller (8) from said outlet roller train by coordinately shifting backward and forward the other rollers of said roller train, upon configuring the calender for working with four or with five calendering cylinders.

2. The calender according to claim 1, **characterized in that** said calendering cylinders second and third are shiftable one independently from the other (10, 11) for independently regulating the gap between said two cylinders and between the third cylinder and the fourth cylinder.

3. The calender of claim 1, **characterized in that** it comprises cross-axis actuators (3) acting on the orientation of the second last calendering cylinder.

4. The calender of claim 1, **characterized in that** it comprises roll-bending means (4) acting on the last calendering cylinder.

## Patentansprüche

1. Glättungsmaschine zum Bearbeiten von Plastik und ähnlichen Materialien mit fünf Glättungszylindern, welche gemäß einer aufrechten oder umgestürzten "L" Anordnung angeordnet sind, wobei der kurze Abschnitt mit einem ersten und einem zweiten Glättungszylinder gebildet ist und der lange Abschnitt mit einem dritten, vierten und fünften Glättungszylinder gebildet ist, und welche Glättungsmaschine aufweist einen Ausgangsrollenzug zum Abheben und Ziehen des Bogens des geglätteten Materials von dem letzten Glättungszylinder, zusammengesetzt mit einer ersten Abhebrolle (8) gefolgt von einer Mehrzahl Zugrollen deren Achsen im Wesentlichen in einer Ebene orthogonal auf der Oberfläche des letzten Glättungszylinders liegen, und zumindest ein Förderband (6) zum gleichförmigen Zuführen des zu glättenden Materials entlang des Abstands zwischen den ersten beiden Glättungszylindern, **dadurch gekennzeichnet, dass** die Rotationsachse des zweiten Zylinders auf einer ersten Abgleichlinie mit der Rotationsachse des ersten Zylinders und auf einer zweiten Abgleichlinie mit der Rotationsachse des dritten Zylinders liegt, welche die erste Abgleichlinie mit einem Winkel von 45° schneidet und eine dritte Abgleichlinie der Rotationsachsen des dritten, vierten und fünften Zylinders, und dass die Glättungsmaschine zum Arbeiten mit entweder vier oder fünf Glättungszylindern konfigurierbar ist und aufweist:
Mittel zum Vorantreiben und Zurückziehen des Förderbands (6) zum Zuführen des zu glättenden Materials zwischen den zweiten und den dritten Glättungszylinder oder zwischen den ersten und den zweiten Glättungszylinder, gemäß der Konfiguration der Glättungsmaschine zum Arbeiten mit vier oder mit fünf Glättungszylindern;
Mittel zum Umkehren der Rotationsrichtung des Glättungszylinders gemäß einem Umschalten von einer Konfiguration in die andere;
Mittel zum Einfügen und Entfernen einer Abheberolle (8) von dem Ausgangsrollenzug mit koordinierten Vor- und Rückbewegungen der anderen Rollen des Rollenzugs gemäß der Konfiguration der Glättungsmaschine zum Arbeiten mit vier oder mit fünf Glättungszylindern.

2. Die Glättungsmaschine nach Anspruch 1, **dadurch gekennzeichnet, dass** der zweite und der dritte Glättungszylinder unabhängig voneinander beweglich (10, 11) sind, um unabhängig den Abstand zwischen diesen beiden Zylindern einstellen zu können und zwischen dem dritten Zylinder und dem vierten Zylinder.

3. Die Glättungsmaschine nach Anspruch 1, **dadurch gekennzeichnet, dass** sie quer zur Achse angeordnete Aktuatoren (3) aufweist, welche auf die Orientierung des vorletzten Glättungszylinders einwirken.

4. Die Glättmaschine nach Anspruch 1, **dadurch gekennzeichnet, dass** sie ein Rollen-Biegemittel (4) aufweist, welches auf den letzten Glättungszylinder wirkt.

## Revendications

1. Dispositif de calandrage pour le traitement de matière plastique et de matériaux similaires, comportant cinq cylindres de calandrage disposés dans un agencement en forme de "L" droit ou retourné, la branche courte étant constituée d'un premier et d'un deuxième cylindre de calandrage et la branche longue d'un troisième, d'un quatrième et d'un cinquième cylindre de calandrage, et comprenant un train de rouleau de sortie pour faire décoller et tirer la feuille de matériau calandrée du dernier cylindre de calandrage, composé d'un premier rouleau de décollage (8) suivi d'une pluralité de rouleaux de tirage dont l'axe est sensiblement situé sur un plan orthogonal à la surface du dernier cylindre de calandrage, et au moins un tapis roulant (6) pour fournir du matériau à calandrer de façon uniforme suivant l'intervalle entre les deux premiers cylindres de calandrage, **caractérisé en ce que** l'axe de rotation du deuxième cylindre se trouve sur une première ligne d'alignement avec l'axe de rotation du premier cylindre et sur une deuxième ligne d'alignement avec l'axe de rotation du troisième cylindre qui intercepte avec un angle de 45 degré la première ligne d'alignement et une troisième ligne d'alignement de l'axe de rotation des troisième, quatrième et cinquième cylindres, et le dispositif de calandrage étant configurable pour travailler soit avec quatre cylindres soit avec cinq cylindres, en comprenant :
des moyens pour faire avancer et reculer le tapis roulant (6) pour fournir le matériau à calandrer entre les deuxième et troisième cylindres de calandrage ou entre les premier et deuxième cylindres de calandrage, en fonction de la configuration du dispositif de calandrage pour travailler avec quatre ou avec cinq cylindres de calandrage ;
des moyens pour inverser le sens de rotation des cylindres de calandrage au moment de la commutation d'une configuration vers l'autre ;
des moyens pour insérer et retirer un rouleau de décollage (8) du train de rouleaux de sortie en décalant de façon coordonnée vers l'arrière et vers l'avant les autres rouleaux du train de rouleaux, au moment de la configuration du dispositif de calandrage pour travailler avec quatre ou avec cinq cylindres de calandrage.

2. Dispositif de calandrage selon la revendication 1, **caractérisé en ce que** les deuxième et troisième cylindres de calandrage peuvent être décalés indépendamment l'un de l'autre (10, 11) pour réguler de façon indépendante l'intervalle entre ces deux cylindres et entre le troisième cylindre et le quatrième cylindre.

3. Dispositif de calandrage selon la revendication 1, **caractérisé en ce qu'**il comprend des actionneurs d'axe transversal (3) agissant sur l'orientation de l'avant dernier cylindre de calandrage.

4. Dispositif de calandrage selon la revendication 1, **caractérisé en ce qu'**il comprend des moyens de courbure de roulage (4) agissant sur le dernier cylindre de calandrage.
